# EUROPEAN PATENT APPLICATION

(11) **EP 4 712 452 A1**
(43) Date of publication of application: **18.03.2026**
(21) Application number: 24200780.5
(22) Date of filing: 17.09.2024
(51) Int. Cl.: H04L 69/16, H04L 65/1069

(54) **METHOD, COMPUTER PROGRAM, AND APPARATUS FOR CHOOSING A SUPPORTED TRANSPORT LAYER PROTOCOL FOR COMMUNICATING IN A TELECOMMUNICATION SYSTEM**

(71) Applicant: Deutsche Telekom AG, 53113 Bonn (DE)
(72) Inventor: COLOM IKUNO, Josep, 2100 Korneuburg (AT)
(74) Representative: 2SPL Patentanwälte PartG mbB

(57) **Abstract**

Examples relate to a method, a computer program, and an apparatus for choosing a supported transport layer protocol at a first network node of a telecommunication system for communicating with a second network node of the telecommunication system. The method (10) for choosing a supported transport layer protocol at a first network node (200) of a telecommunication system (300) for communicating with a second network node (220) of the telecommunication system (300) comprises obtaining (12), at the first network node (200), information about one or more supported transport layer protocols of the second network node (220). The method (10) further comprises selecting (14) a supported transport layer protocol, which is supported by the first network node (200) and the second network node (220), based on the information about the sup-ported transport layer protocols of the second network node (220). The method (10) also comprises communicating (16) messages between the first network node (200) and the second net-work node (220) based on the supported transport layer protocol.

## Description

### Field

Examples relate to a method, a computer program, and an apparatus for choosing a supported transport layer protocol at a first network node of a telecommunication system for communicating with a second network node of the telecommunication system, more particularly, but not exclusively, to a concept for supporting transport protocol selection in a telecommunication network comprising network nodes supporting different transport layer protocols.

### Background

In telecommunication systems communication among network nodes relies on transport layer protocols. The transport layer protocol in telecommunication systems plays a crucial role in ensuring reliable data transfer between devices over a network. It operates at the fourth layer of the OSI (Open Systems Interconnection) model and is responsible for end-to-end communication, providing services such as flow control, error detection, and correction. The transport layer protocols, like Transmission Control Protocol (TCP) and User Datagram Protocol (UDP), manage the segmentation of data, its transmission across the network, and reassembly on the receiving end. TCP, being a connection-oriented protocol, ensures that all packets arrive in order and are free of errors through mechanisms such as acknowledgments, retransmissions, and congestion control. UDP, on the other hand, is a connec-tionless protocol that offers faster data transfer but without guarantees of reliability, making it suitable for applications like video streaming and online gaming where speed is critical.

In telecommunication systems, the choice between TCP and UDP depends on the requirements of the application. For instance, TCP is ideal for applications like file transfers, emails, and web browsing, where data integrity and order are paramount. It ensures that every packet is accounted for, thus avoiding loss or corruption of information. UDP, however, is preferred for real-time applications where delays can impact the user experience, such as VoIP (Voice over IP) or live broadcasts. Although UDP sacrifices reliability, it reduces latency by eliminating the overhead involved in establishing connections and verifying packet delivery. Thus, the transport layer protocol is vital in shaping the performance and reliability of network communications, tailored to the needs of different applications. Additionally, specialized transport layer protocols such as SCTP (Stream Control Transmission Protocol) exist. SCTP is a transport protocol that provides services unavailable from neither TCP nor UDP, such as multihoming, un-ordered reliable message delivery, extensibility and others.

In telecommunication systems such as 3GPP (3^{rd} Generation partnership Project) networks, transport layer protocols, especially SCTP, are used for communication between the Radio Access Network (RAN) and the Core Network (CN) as well as for communication between the nodes within the RAN or CN. In control plane applications, protocol encoding is typically encoded using Abstract Syntax Notation. 1, ASN. 1, especially for RAN protocols, although information elements (IEs) may be explicitly encoded in specifications, such as in the case of PFCP (Packet Forwarding Control Protocol, UDP-based).

In 3GPP networks, the Service-Based Architecture (SBA) is a modern network framework introduced in 5G (5th Generation) systems to enhance flexibility, scalability, and service delivery of control plane messages. Unlike previous architectures that relied on rigid point-to-point interfaces between network functions, SBA allows network functions to communicate with each other through standardized service-based interfaces using web protocols like HTTP/2 (Hyper Text Transfer Protocol) and RESTful (Representational State Transfer) APIs (Application Programming Interfaces), whereas parameter encoding can be included in the API definition and is often encoded in messages in JavaScript Object Notation (JSON). This architecture enables the dynamic deployment and scaling of network functions, fostering a more cloud-native, software-driven approach to network management. Each network function in SBA, such as the Access and Mobility Management Function (AMF) or the Session Management Function (SMF), is treated as a service provider, offering specific functionalities to other services within the network by means of one or more APIs, associated to network function services. This decoupling of network functions makes it easier to introduce new services, update existing ones, and manage network resources efficiently, paving the way for innovative applications in 5G, including IoT (Internet of Things), enhanced mobile broadband, and ultra-reliable low-latency communication (URLLC).

### Summary

It is a finding of the present disclosure that while current procedures based on the NG-AP (Next Generation Application Protocol) and Xn-AP (Xn Application Protocol) protocols do work, they do not provide an easy means for indicating the support of the NG-AP protocol or other non-SBA-based protocols for an SBI (Service-Based Interface) endpoint. There is a demand for automatic configuration of service endpoints based on required capabilities and for enabling subscription to events based on filters in a manner such that the same principles used within the CN control plane can also be used with and/or within RAN. Similarly, the use of PFCP (Packet Forwarding Control Protocol, UDP-based) on the N4 interface complicates the protocol stack in cloud-based (e.g. container-based) deployments, especially by requiring a different treatment than HTTP-based communication. While many out-of-the-box solutions exist for proxying, sidecars, load balancing, re-routing, access control, firewalling, etc. for HTTP-based traffic, UDP plus PFCP remains, and will remain, a niche. The same is valid for SCTP-based solutions, where further development and support by third party applications is limited due to its niche application in telecommunication systems.

On the road towards 6G, the present disclosure proposes an evolution to the SBA applicable to the whole system, that is both, within CN and RAN, as well as between CN and RAN. Enhancements of the SBA protocol stack may allow for more flexible deployments, as well as a simplified protocol stack that is more cloud-native. It may allow the possibility to (finally) apply a state-of-the-art protocol stack instead of the current legacy protocol stack. Examples may provide enhancements to the SBA protocol stack, focusing on support for an enhanced SBA transport layer in a way that is backwards-compatible with the current SBA approach, as well as being advantageously simple to deploy. Examples may additionally provide enhancements to the current ASN.1-based and/or PFCP-based control plane stacks, such that information elements (IEs) defined in the current protocol stacks can be reused, thus enabling a simple evolutionary path providing a simple transition path without need to recode and/or re-define currently-existing IEs.

Additionally, examples may provide enhancements to SBA-based procedures, such that a network function repository (NRF) can be enhanced to support an enhanced SBA protocol stack, ASN. 1-based and/or PFCP-based application in a backwards-compatible manner. This further enhances the flexibility in which network elements can be deployed, as well as provides a more efficient means of deploying network elements based on a common protocol stack using state-of-the-art protocols.

Examples provide enhancements to network function profiles, such that information associated with network functions, as well as other network elements, especially RAN nodes, especially gNBs, can be retrieved, especially information associated to a supported protocol stack. The term network function profile, RAN element profile, network element profile is indistinctively used to refer to enhanced network function profiles.

Examples therefore provide a method for choosing a supported transport layer protocol at a first network node of a mobile telecommunication system for communicating with a second network node of the mobile telecommunication system. The method comprises obtaining, at the first network node, information about one or more supported transport layer protocols of the second network node. The method further comprises selecting a supported transport layer protocol, which is supported by the first network node and the second network node, based on the information about the one or more supported transport layer protocols of the second network node. The method further comprises communicating messages with between the first network node and the second network node based on the supported transport layer protocol. Therefore, transport layer protocols for communication among network nodes based on the actual capabilities.

The obtaining of the information about supported transport layer protocols of the second network node may comprise communicating with a third network node and receiving the information about supported transport layer protocols of the second network node from the third network node. Especially the communicating may comprise requesting information based on any one of the parameters of a network node identifier, a network node type, and a supported transport layer protocol(s). Hence, examples may enable a central function at the third network node for other nodes in the network to obtain transport protocol information from, to register their own transport protocol capabilities with, respectively. Thereby, efficient or improved transport protocol coordination can be enabled.

For example, the third network node is configured to perform a network repository function. Examples may enable a centralized repository or registry for available transport protocol versions and interfaces. In further examples the obtaining of the information about supported transport layer protocols of the second network node may comprise determining the information based on an endpoint address of the second network node, based on a predefined protocol port, and/or based on a name of the second network node. Hence, at least some examples may enable an implicit rule or communication that allows obtaining the supported transport protocols of another node.

The information about supported transport layer protocols of the second network node may indicate a supported protocol stack and/or specific versions of supported protocols. That way, different protocol generations or evolved protocol stacks may be supported. The information about supported transport layer protocols of the second network node may comprise information about which interfaces of the second network node support which protocol versions. That way, interface-specific protocols or protocol stacks may be distinguished in examples.

The telecommunication system may comprise an access network, AN, especially a radio access network, RAN, and a core network, CN. Hence, the telecommunication system may be a mobile communication system. The first and second network nodes may be comprised in the RAN, the CN, or one in the RAN and one in the CN. Examples may hence enable protocol coordination in different parts of a network. For example, the information about supported transport layer protocols of the second network node comprises information about whether an interface of the second network node supports Quick Universal Datagram Protocol, UDP, Internet Connections, QUIC, and/or Hyper Text Transfer Protocol, HTTP, -based communication, especially whether HTTP/2 and/or HTTP/3 are supported. The interfaces may include one or more elements of the group of Packet Forwarding Control Protocol, PFCP; Next Generation Application Protocol, NG-AP; Xn Application Protocol, Xn-AP; E1 Application Protocol, E1-AP; F1 Application Protocol, F1-AP; and/or other Abstract Syntax Notation. 1, ASN. 1, -based schemas according to the specifications of the 3rd Generation Partnership Project.

The information about supported transport layer protocols of the second network node may be associated to an interface of the second network node, especially an interface associated to a network function service, N1, N2 and/or N4 interface. The supported transport layer protocol may support a control plane, CP, protocol stack that provides transport of ASN.1 and/or PFCP containers over HTTP. The CP protocol stack may be configured to use Multi-purpose Internet Mail Extensions, MIME, multipart for transporting ASN.1-based and/or PFCP containers, especially using one or more of the following MIME types:
application/vnd.3gpp.xnap,
application/vnd.3gpp.e1ap,
application/vnd.3gpp.flap, and
application/vnd.3gpp.pfcp.

That way, MIME may enable an efficient inter network node communication such that current information element encodings can be efficiently reused. In further examples the method may comprise providing information about supported transport layer protocols and/or associated MIME types of the first network node to another network node. Another example is a computer program having a program code for performing one of the methods described herein, when the computer program is executed on a computer, a processor, or a programmable hardware component.

Another example is an apparatus, which is configured to choose a supported transport layer protocol at first network node of a telecommunication system for communicating with a second network node of the telecommunication system. The apparatus comprises one or more interfaces configured to communicate in the telecommunication system and one or more processing devices configured to perform one of the methods described herein. A further example is a network node comprising such an apparatus, which is configured to perform one of the methods described herein.

A telecommunication system is another example comprising an example of an apparatus as described above.

### Brief description of the Figures

Some examples of apparatuses, methods, and/or computer programs will be described in the following by way of example only, and with reference to the accompanying figures, in which
Fig. 1 shows a block diagram of an example of a method for choosing a supported transport layer protocol at a first network node of a telecommunication system;
Fig. 2 illustrates a block diagram of an example of an apparatus configured to choose a supported transport layer protocol at first network node of a telecommunication system and an example of a network node;
Fig. 3 depicts an overview of control plane protocol in a 5GS;
Fig. 4 shows block diagrams of examples of protocol stacks used in a control plane in an example and MIME Multipart payload types in an example;
Fig. 5 illustrates examples of RAN control plane protocol stacks for Xn and NG interfaces for HTTP/2 at the top and for HTTP/3 at the bottom;
Fig. 6 illustrates different transport protocol layers in a control plane in an example;
Fig. 7 depicts message sequence charts for support of multiple transport layers at the top and for an eN11 negotiation based on an NF profile at the bottom; and
Fig. 8 shows an example of a RAN and CN deployment.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

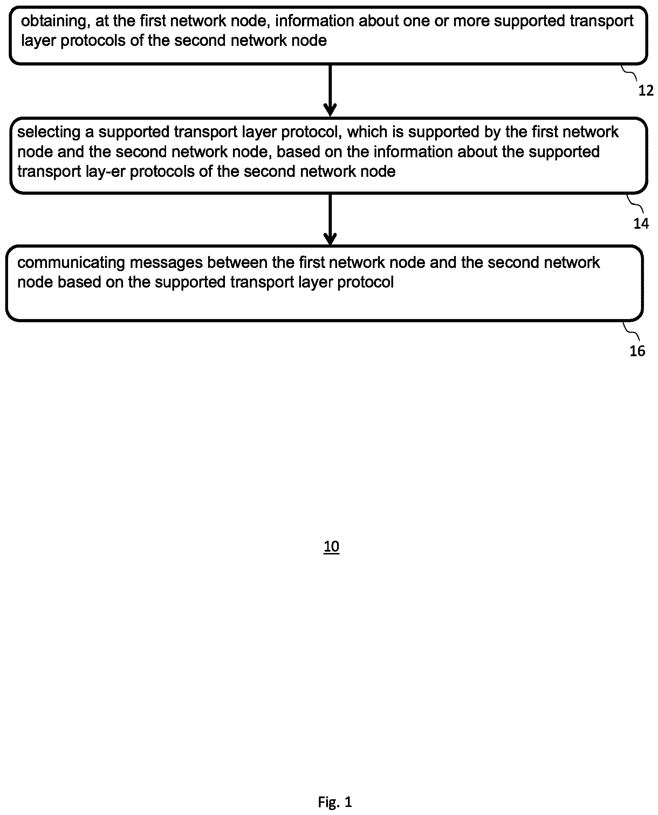

Fig. 1 shows a block diagram of an example of a method 10 for choosing a supported transport layer protocol at a first network node of a telecommunication system.

In general, a telecommunication system refers to a complex network of devices, technologies, and protocols designed to enable the transmission of information over distances. This system facilitates the exchange of data, voice, video, and other forms of communication between users, typically through wired or wireless means. Key components of a telecommunication system include transmission media (like fiber optics or radio waves), switching and routing devices (such as routers and base stations), and end-user devices (like smartphones, computers, and servers). The system operates through various layers of protocols that ensure reliable, secure, and efficient communication, whether for personal, business, or governmental use. These systems are integral to modern society, supporting services such as mobile communication, internet access, satellite transmission, and broadcasting, enabling global connectivity and access to information.

A network node in a telecommunication system refers to any active, physical or logical device that is responsible for creating, receiving, or transmitting data within a network. These nodes serve as critical points of communication and data transfer, enabling the flow of information across the network. Examples of network nodes include routers, switches, base stations, servers, and user devices like smartphones and computers. Each node plays a specific role, such as directing data traffic, managing network connections, or handling user requests. In a telecommunications system, network nodes are interconnected, often forming a complex mesh that allows for efficient, scalable communication between multiple devices. These nodes can operate on different layers of the OSI model, from physical infrastructure to application services, and are essential for maintaining the integrity, speed, and reliability of communication networks.

A mobile communication system is a type of telecommunication infrastructure that allows users to transmit voice, data, and multimedia services wirelessly while on the move. This system operates through a network of interconnected components, including mobile devices (like smartphones and tablets), base stations (NodeBs, eNodeBs, gNodeBs), and core network elements, facilitating seamless communication across wide geographic areas. Mobile communication systems use radio frequencies to establish connections between mobile devices and base stations, which in turn connect to the broader public or private networks, such as the internet or telephony systems. Modern mobile communication systems are based on technologies like 4G LTE (Long Term Evolution) and 5G, which provide high-speed data transfer, low latency, and improved connectivity. These systems enable various services, including voice calls, text messaging, video streaming, and internet access, making them integral to personal, commercial, and industrial communication in today's interconnected world.

More details can be found in the 3GPP Technical Specifications (TS), e.g. 3GPP TS 23.501 V19.0.0 (2024-06), System Architecture for the 5G System (5GS), 3GPP TS 23.502 V19.0.0 (2024-06), Procedures for the 5G System (5GS), and further specifications referenced therein.

As shown in Fig. 1 the method 10 comprises obtaining 12, at the first network node, information about one or more supported transport layer protocols of the second network node. As will be detailed subsequently the obtaining 12 may be explicit, e.g. by means of a message exchange, or implicit by means of a specific address or the use of a specific protocol port. The method 10 further comprises selecting 14 a supported transport layer protocol, which is supported by the first network node and the second network node, based on the information about the supported transport layer protocols of the second network node. The method 10 further comprises communicating 16 messages with between the first network node and the second network node based on the supported transport layer protocol. In case the second network node only supports one transport channel protocol the step of selecting 14 may correspond to deciding to use this protocol or to refrain from using it and, for example, alternatively using a compatible version, choosing to communicate with another network node instead or even aborting a communication intent with the second node due to a lack of support of a given transport layer protocol.

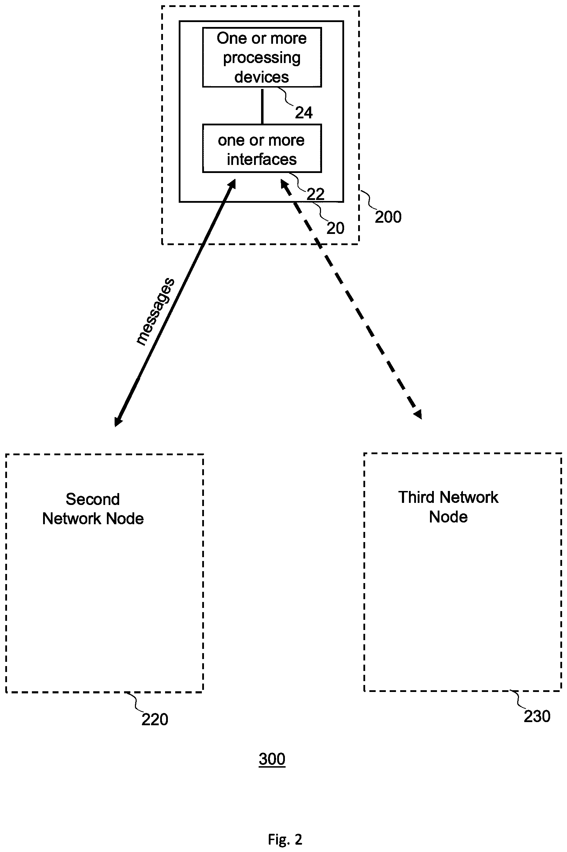

Fig. 2 illustrates a block diagram of an example of an apparatus 20 configured to choose a supported transport layer protocol at a first network node 200 of a telecommunication system 300 and an example of a network node 200. The apparatus 20 comprises one or more interfaces 22, which are configured to communicate in the telecommunication system 300. The one or more interfaces are coupled to one or more processing devices 24. The one or more processing devices 24 are configured to perform one of the methods 10 described herein. Fig. 2 also depicts a network node 200 comprising the apparatus 20 as well as a second network node 220, with which messages are communicated after an appropriate transport protocol has been selected. Optional components are shown in broken lines in Fig. 2. As will be detailed in the following in some examples there may be a third node 230, which supports the obtaining 12 of the supported transport protocols.

As illustrated in Fig. 2, the respective one or more processing devices 24 are coupled to the one or more interfaces 22. The one or more interfaces 22 may correspond and/or be associated to one or more inputs and/or outputs for receiving and/or transmitting information, which may be in digital (bit) values according to a specified code or protocol, within a module, between modules or between modules of different entities. For example, an interface 22 may comprise interface circuitry configured to receive and/or transmit information. In examples an interface 22 may correspond to any means for obtaining, receiving, transmitting or providing analog or digital signals or information, e.g., any connector, contact, pin, register, input port, output port, conductor, lane, logical endpoint, especially based on internet protocol, IP, especially exposing an IP port and/or an API; etc., as well as any abstraction thereof, especially based on virtualization, containerization, service abstraction, proxying, load-balancing, network address translation (NAT), cloud computing and/or serverless computing; which allows providing or obtaining a signal or information. An interface 22 may be configured to communicate (transmit, receive, or both) in a wireless or wireline manner and it may be configured to communicate, i.e., transmit and/or receive signals, information with further internal or external components. The one or more interfaces 22 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. Moreover, the one or more interfaces may be APIs in some examples.

The one or more processing devices 24 may be implemented using one or more processing units, one or more circuitries, any means for processing, such as a processor, a computer or a programmable hardware component being operable with accordingly adapted software. In other words, the described function of the one or more processing devices 24 may as well be implemented in software, which is then executed on one or more programmable hardware components. Such hardware components may comprise a general-purpose processor, a Digital Signal Processor (DSP), a micro-controller, etc. and/or an abstraction thereof.

In examples a network entity or node may be any network node in a Radio Access Network (RAN), a Core Network (CN), or any node of any telecommunications system. For example, a network entity may generate cells of a cellular system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device, e.g. a base station or access point. Such a radio signal may comply with radio signals as, for example, standardized by 3GPP (3rd Generation Partnership Project) or, generally, in line with one or more of the above listed systems. Thus, a network entity may be a base station and may correspond to, a NodeB, an eNodeB, an ngNB, a gNB, a BTS (Base Transceiver Station), an access point, all of which may be implemented in a satellite, plane, etc.

The telecommunication system 300 may hence be cellular. The term cell refers to a coverage area of radio services provided by a transmission point, a remote unit, a remote head, a remote radio head, communication device, network entity or a NodeB, an eNodeB, an ngNB, a gNB, a beam, a satellite, respectively. In general, the UE may be a communication device that is capable of communicating wirelessly. In particular, however, the communication device may be a mobile communication device, e.g., a communication device that may be suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a computer, a smartwatch, a laptop computer, a tablet computer, etc. The communication device may be in a vehicle, a car, a bus, a truck, a construction and/or agricultural machinery, a train, an airplane, a boat, a ship, a cruise ship, an Internet of Things (IoT) device, a logistics application, etc.

In general, the (mobile) telecommunication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a New Radio (NR) system, a Long-Term Evolution (LTE, 4G), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc. Further network entities or nodes are those comprised in a core network of the mobile communication system 300, as will be outlined in more details subsequently.

In the following example the 5G Control Plane (CP) will be considered in a mobile communication system. In the context of 5G System (5GS), the control plane refers to the network functions and processes that manage and control the signaling and overall operation of the network. It is responsible for tasks such as establishing and managing connections, mobility management, session handling, authentication, security, and policy enforcement. The control plane orchestrates communication between the User Equipment (UE) and the 5G Core (5GC), ensuring that the user traffic is properly routed and managed according to network policies and configurations. By separating it from the user plane, which handles the actual data transfer, the control plane enhances the flexibility, scalability, and efficiency of 5G networks, allowing for dynamic adjustments in real-time to accommodate the diverse service requirements of 5G applications, including enhanced mobile broadband (eMBB), massive machine-type communications (mMTC), and ultra-reliable low-latency communications (URLLC).

5GS, while often referred to as extensively using Service Based Architecture (SBA), i.e. using APIs and HTTP-based communication, also uses some, less cloud-friendly protocol stacks. Further details can be found in 3GPP TS 29.502 V18.7.0 (2024-06), 5G System; Session Management Services.

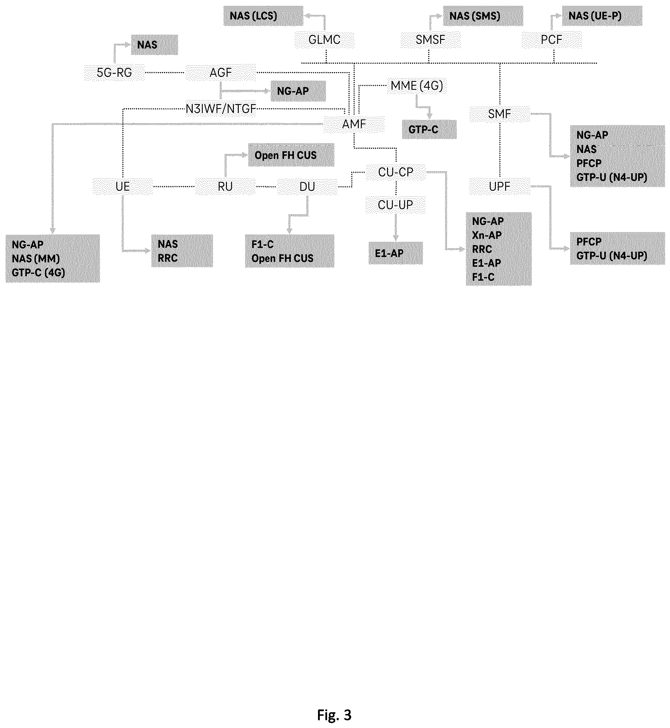

The 5G protocol stacks will be provided as overview of the CP protocol stacks used, with Fig. 3 offering a summary. Fig. 3 depicts an overview of control plane protocols in a 5GS. Fig. 3 shows different network nodes/ network functions (NFs), some of which may be implemented in a single network node and/or sharing components with other network nodes. Fig. 3 shows a 5G-RG (5G Residential Gateway) with a Non-Access Stratum (NAS) interface, an Access Gateway function (AGF) with a NG-AP (Next Generation Application Protocol) interface, a N3IWF (Non-3GPP Interworking Function)/NTGF (Non-Trusted Gateway Function) with a NG-AP (Next Generation Application Protocol) interface. The AGF and the N3IWF/NTGF interface to an AMF (Access and Mobility Management Function) with NG-AP for communication. The AMF uses NG-AP towards RAN, NAS (especially using Mobility Management, MM containers) towards the UE and GTP-C (GPRS (General Packet Radio Service) Tunneling Protocol - Control Plane) towards a Mobility Management Entity (MME). SBA is used with most other CN_ entities. Fig. 3 further illustrates the UE, Remote Unit (RU), Distributed Unit (DU), and Centralized Unit (CU)-CP and CU-UP (User Plane), which are also connected to the AMF. Moreover Fig. 3 illustrates GLMC (Gateway Location Management Center), SMSF (Short Message Service Function), a PCF (Policy Control Function), SMF (Session Management Function), and UPF (User Plane Function), which all are connected to the AMF. Fig 3 also shows a Mobility Management Entity (MME) connected to the AMF. Further details on the NFs can be found in the corresponding 3GPP specifications.

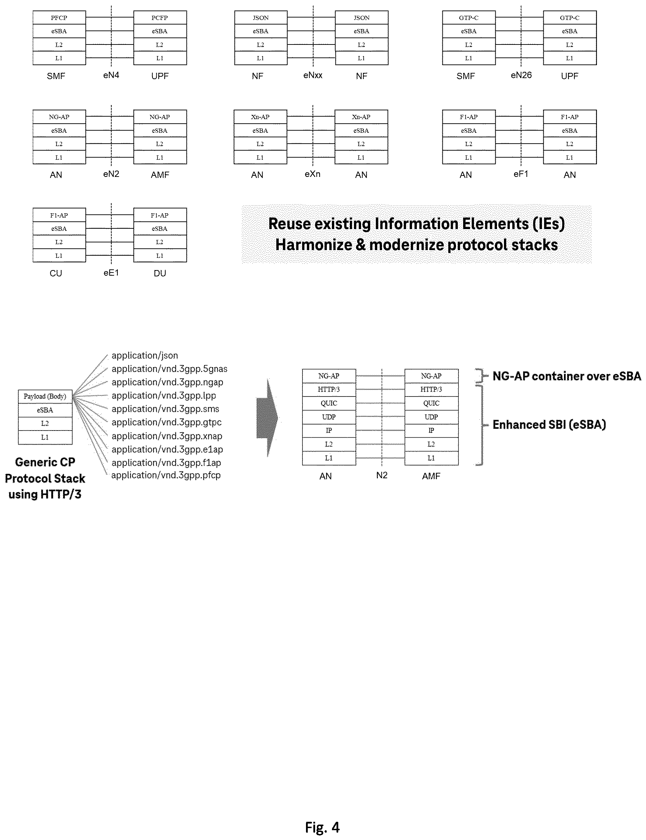

Examples may use an enhanced protocol CP stack, which is also referred to enhanced SBA (eSBA). Fig. 4 shows block diagrams of examples of protocol stacks used in a control plane and MIME Multipart payload types. In generic terms, the protocol stack is based on an extension/enhancement of current MIME multipart types, as seen at the bottom of Fig. 4. The CP protocol stack can be configured to use MIME multipart for transporting ASN. 1-based and/or PFCP containers, especially using one or more of the following MIME types:
application/vnd.3gpp.xnap,
application/vnd.3gpp.e1ap,
application/vnd.3gpp.flap, and
application/vnd.3gpp.pfcp.

Fig. 4 shows the protocol stacks used in examples between the NFS, wherein the interfaces in between are called enhanced versions. Fig. 4 shows from top to bottom (left to right):
- eN4 between SMF and UPF using eSBA at the transport layer;
- eNxx between NF and NF using eSBA at the transport layer with JSON (JavaScript Object Notation) on top;
- eN26 between SMF and UPF using eSBA at the transport layer;
- eN2 between AN and AMF using eSBA at the transport layer;
- eXn between AN and AN using eSBA at the transport layer;
- eF1 between AN and AN using eSBA at the transport layer;
- eE1 between CU and DU using eSBA at the transport layer

In examples, existing Information Elements (IEs) may be reused, and the protocol stacks are harmonized and modernized. Fig. 4 shows MIME Multipart payload types at the bottom, which are transmitted in a generic CP protocol stack using HTTP/3. The protocol stack is detailed at the bottom right of Fig. 4 using a NG-AP container over eSBA (HTTP/3, QUIC, UDP, IP, L2, L1).

Fig. 4 show an enhanced protocol stack for 6G. In order to apply such a target protocol stack, components detailed in the following may be needed.

In order to further enhance the communication between gNBs (RAN) and/or NFs (CN), examples enhance the protocol stack used by CP, such that HTTP (e.g. HTTP/3) can be used as transport while keeping the application layer backwards-compatible. This includes
- Xn and NG interfaces; and
- Nxx interfaces, especially the N4 interface, which is currently not SBA-based.

The supported transport layer protocol may support a control plane, CP, protocol stack that provides transport of ASN. 1 and/or PFCP containers over HTTP. The supported transport layer protocol may additionally include the MIME type associated with a transport layer protocol.

The main advantage of separating the Information Element (IE) definition and the transport layer (e.g. instead of re-defining everything to JSON) is that required (re-)standardization work can be reduced while still retaining most of the advantages.

In the following RAN CP interfaces (ASN.1-based interfaces) will be detailed first. For CP in the RAN and between RAN and CN, there are advantages to replacing the SCTP (Stream Control Transmission Protocol) transport with HTTP/2 (as currently used within SBA) layer for Xn, NG, E1 and F1 interfaces. Going forward, even HTTP/3 could be used instead of HTTP/2:
- SCTP is a legacy protocol, and support for SCTP in modern virtualization/containerization platforms is not as broad as for other protocols, such as HTTP;
- SCTP support will always trail support for more broadly-used protocols; and
- HTTP allows for the option to integrate CP encryption directly in the control plane. In the case of SCTP, encryption needs to be deployed as a separate, underlying and/or overlaying layer.

A similar, analogous argument can be employed to the transport of the PFCP protocol via UDP.

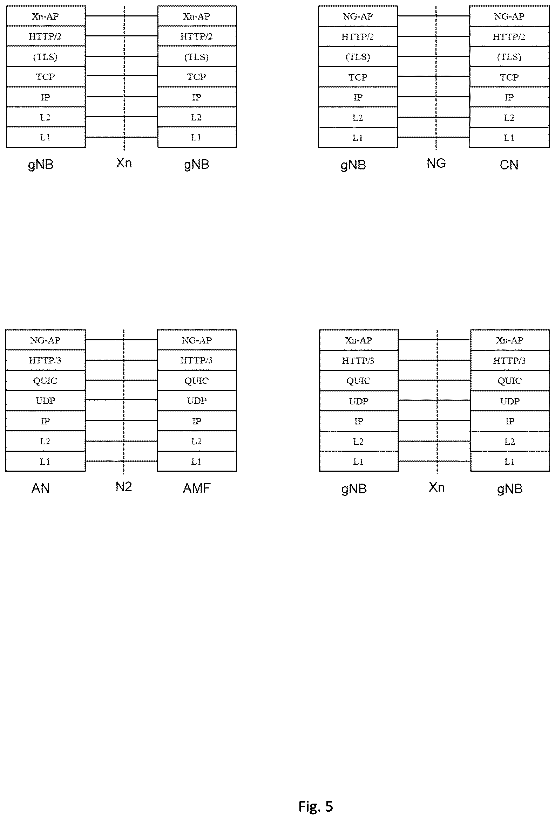

Fig. 5 illustrates examples of RAN control plane protocol stacks for Xn and NG interfaces for HTTP/2 at the top and for HTTP/3 at the bottom. Fig. 5, at the top, shows a RAN CP protocol stack using HTTP/2, Xn (left) and NG (right) interfaces. E1 and F1 interfaces are analogous. As can be seen from theses protocol stacks Transport Layer Security (TLS) may be used between HTTP/2 and TCP (Transmission Control Protocol), as opposed to currently, where it is only possible as overlay and/or underlay. Furthermore, in some examples the interfaces can be further enhanced by using HTTP/3 instead of the HTTP/2 protocol currently used in SBA. In this case, further additional advantages are possible:
- The underlying QUIC layer provides path relocation (e.g. in case of a network and/or element failure), which is needed to feature-match SCTP;
- Enhanced flow management without head-of-line blocking; and
- Integration of encryption already in the transport layer, as opposed as between the transport and application layer.

Fig. 5 shows a RAN CP protocol stack using HTTP/3 at the bottom, Xn (left) and NG (right) interfaces. E1 and F1 interfaces are analogous. In this example HTTP/3 and QUIC replace HTTP/2 and TLS. The change in the interface purposedly targets the transport layer. This approach is advantageous because:
- The number of Information Elements (IEs) defined for each of the interfaces is very big. Exemplarily, the 3GPP specification defining the IEs for NG-AP is 650+ pages long. Avoiding a necessary re-coding of the IEs is desirable and advantageous;
- By keeping the IEs, the logic in the network element can be kept with minimal or no changes; and
- Simultaneously, by only replacing the transport layer (SCTP), the listed advantages can be realized.

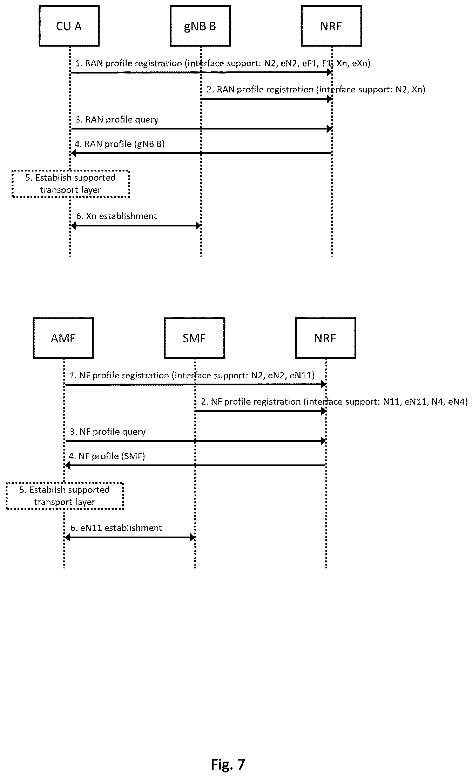

An issue with the approaches above, for which Fig. 7 provides an example addressing these issues, is that
- there is currently no possibility for a RAN node to be aware and/or choose a transport method for the NG, Xn, E1 and/or F1 interfaces;
- unless it is possible to support the legacy and the new approach, it would be necessary to simultaneously upgrade a full RAN deployment, which is not only costly, but also very complex, which results in the need to be able to roll back in case of error(s); and
- a mismatch in the expected transport layer would result in a network element discarding necessary IEs that, while it would be able to understand, it cannot receive because of an unsupported transport layer.

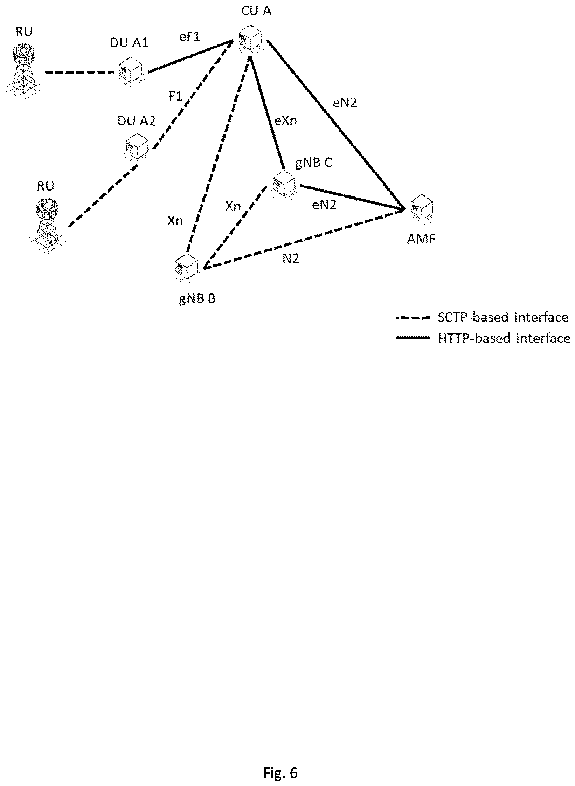

Fig. 6 illustrates different transport protocol layers in a control plane in an example. Fig 6 shows an example of how a mixture of SCTP-based and HTTP-based interfaces could look in a deployment. Fig. 6 shows two RUs using SCTP-based interfaces indicated by broken lines to connect to their DUs, A1 and A2. DU A1 uses the enhanced HTTP-based interface eF1 (solid line) to connect to CU A while DU A2 uses the SCTP-based interface F1 to connect to CU A. CU A connects to gNB B via SCTP-Xn, via HTTP-eXN to gNB C, and via HTTP-eN2 to AMF. gNB C uses XN (SCTP) to connect to gNB B and eN2 (HTTP) towards AMF. gNB B uses N2 (SCTP) to communicate with the AMF. Fig. 6 therefore shows different transport layer protocol use simultaneously in the CP. In this specific example, Distributed Unit (DU) A2 and gNB B only support SCTP-based interfaces. Hence, other network elements have to fall back to the legacy transport layer, whereas, where possible, the new transport layer is used. The same is applicable for the E1 interfaces, although it is not shown in Fig. 6.

In order to allow for flexible RAN deployments, RAN nodes (e.g. gNB, CU, DU) can indicate specific support for one or more transport layers for a given interface in line with an example of the method 10. Fig. 7 depicts message sequence charts for support of multiple transport layers at the top and for an eN11 negotiation based on an NF profile at the bottom.

Fig. 7 shows a message sequence between CU A, NRF, and gNB B at the top.
1. CU A (the first network node) registers the transport layers it supports for the interfaces it supports. Hence, in this example the method 10 may comprise registering supported transport protocols at the third network (NRF). In general, the method 10 may include providing information about supported transport layer protocols and/or associated MIME types of the first network node to another network node. In this case, it supports N2, F1 and Xn, both SCTP-based and HTTP-based. HTTP-based interfaces are denoted with an "e" prefix.
2. Similarly, gNB 2 (the second network node) registers its supported interfaces. In this case, it only supports SCTP-based interfaces.
3. CU-A queries the NRF for suitable gNBs in order to find a target for Xn interface setup matching a given Phy-CID (Physical Cell ID). In this example the obtaining 12 of the information about supported transport layer protocols of the second network node (gNB B) comprises communicating with a third network node (NRF) and receiving the information about supported transport layer protocols of the second network node (gNB B) from the third network node (NRF). The communicating with the third network node comprises requesting information based on any one of the parameters network node identifier (e.g. cell ID), network node type, and supported transport layer protocol(s).
   In this example the third network node is configured to perform a network repository function (NRF). For example, a network node, especially the second network node and/or a further network node (especially a OAM (Operation and Maintenance) and/or BSS (Base Station Subsystem) network node, instructs the third network node to register and/or associate information related to the supported transport layer protocols of the second network node to the second network node. For example, the information is included in a network function profile associated with the second network node.
4. The NRF returns the network element profile information of gNB B.
5. CU A evaluates the interface support and establishes that eXn is not supported, hence Xn should be established.
6. A Xn interface (SCTP-based) is established with gNB B.

An alternative flow with gNB C instead of gNB B would result in:
- In step 2, gNB C would indicate its support for eXn (it could also additionally indicate support for Xn for backwards-compatibility reasons).
- In step 5, establishing that eXn is the chosen transport layer out of the possible choices.
- In step 6, the establishment of an eXn interface towards gNB C.

Examples may consider the following implementations of a transport layer support indication:
- Explicit indication:
   ∘ List of transport layer(s) supported for a given interface(s), endpoint(s), exposed service(s), and
- The obtaining 12 of the information about supported transport layer protocols of the second network node may comprise determining the information based on an endpoint address of the second network node, based on a predefined protocol port, and/or based on a name of the second network node.

Implicit indication:
∘ As part of an endpoint address, e.g. sctp://<IP>:port, esba://<url>, http://<url>/http3,
∘ Association of a given port to a specific service, e.g. port XYZ defined in the context of mobile networks as used for HTTP/3-based control plane, and
∘ As part of the network node's name, FQDN (Fully Qualified Domain Name).

In examples the information about supported transport layer protocols of the second network node may indicate a supported protocol stack and/or specific versions of supported protocols. It may further comprise information about which interfaces of the second network node support which protocol versions.

For example, the transport layer indication is considered to be associated with:
- A given protocol stack (e.g. using SCTP or HTTP-based), and/or
- Specific version(s) of the protocols of the stack (e.g. the TLS version being used/supported, using HTTP/2 or HTTP/3).

In the following CN interfaces (Nxx) will be considered. For the CP in the CN, there are advantages to fully using an HTTP-based transport layer between all CP elements (e.g. the N4 interface uses PFCP on UDP), while for current SBA-based interfaces, HTTP/3 could be used. For example, the information about supported transport layer protocols of the second network node is associated to an interface of the second network node, especially an interface associated to a network function service, N1, N2 and/or N4 interface. The main advantage of HTTP/3 vs. HTTP/2 is that the underlying QUIC layer provides much better congestion control thanks to avoiding head of line blocking.

Head-of-line (HOL) blocking is a performance issue that occurs in networked systems, particularly in scenarios involving queuing and packet switching. It happens when a packet at the front of a queue is delayed, blocking the subsequent packets from being processed, even though those packets might be ready for transmission or processing. This can significantly degrade system performance and throughput, as other packets must wait for the blocked packet to be resolved, regardless of their priority or urgency. HOL blocking is commonly observed in input-queued switches or routers, where incoming data streams are stored in queues for processing. When the packet at the front of the queue is held up, typically due to resource contention or destination unavailability, all other packets behind it are delayed as well, leading to inefficiencies. HOL blocking can occur in both layer 2 (data link) and layer 3 (network) operations. Various strategies, such as virtual output queuing and prioritization algorithms, have been implemented to mitigate HOL blocking and improve the performance and responsiveness of network systems.

The information about supported transport layer protocols of the second network node may hence comprise information about whether an interface of the second network node supports Quick Universal Datagram Protocol, UDP, Internet Connections, QUIC, and/or Hyper Text Transfer Protocol, HTTP,-based communication, especially whether HTTP/2 and/or HTTP/3 are supported. The interfaces may include one or more elements of the group of Packet Forwarding Control Protocol, PFCP; Next Generation Application Protocol, NG-AP; Xn Application Protocol, Xn-AP; E1 Application Protocol, E1-AP; F1 Application Protocol, F1-AP; and/or other Abstract Syntax Notation.1, ASN. 1, - based schemas according to the specifications of the 3rd Generation Partnership Project.

In a similar way to the solution proposed for RAN CP, an indication in the NF profile can be considered regarding the supported transport layer(s) for a given NF and/or NF service. As illustrated in the previous Figs, the telecommunication system may comprise a radio access network, RAN, and a core network, CN, and the first and second network nodes may be comprised in the RAN, the CN, or one in the RAN and one in the CN.

Extending the network diagram shown in the prior section, it is possible support a network deployment using an enhanced transport layer for the CP, with the goal of ultimately achieving a simplified CP protocol stack. In the example below, both AMF and SMF support an HTTP/3-based transport layer, whereas the UDM (Unified Data Management) does not (yet). UDM, being a subscription-related system, is often a system that is more complex to replace and with a long lifecycle.

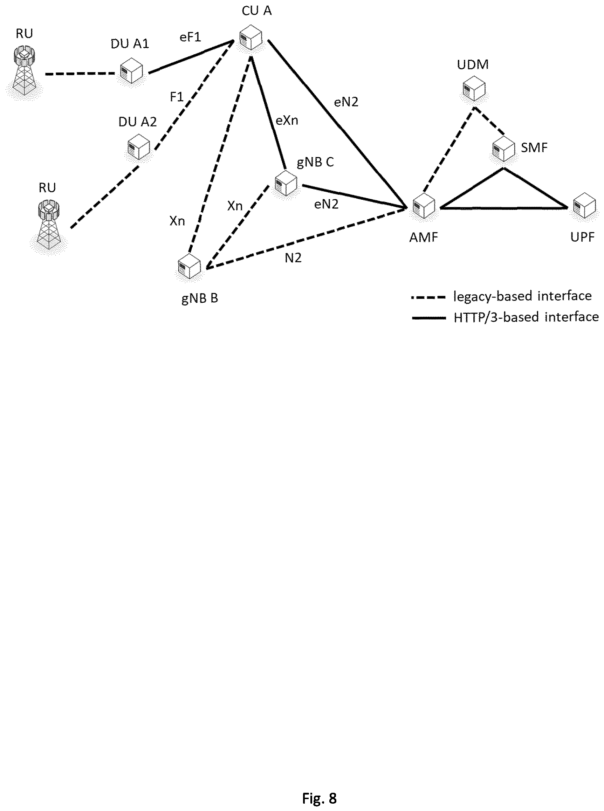

Fig. 8 shows an example of a RAN and CN deployment using dashed lines to indicate legacy-based interfaces and solid lines to indicate HTTP/3-based interfaces. The principle of the protocol negotiation or selection is the same as outlined above. As can be seen from Fig. 8, in such a scenario both versions of the transport layer protocols are possible in RAN, CN and between RAN and CN.

Some examples can be summarized as follows. Examples may enable network node registration on NRF including protocol stack(s) supported, especially regarding support for HTTP-based NG-AP, Xn-AP, E1-AP, F 1-AP and/or other ASN.1-based schemas, support for HTTP-based PFCP, HTTP version being supported, especially HTTP/2 and/or HTTP/3, and transport protocol(s) supported, especially support for QUIC. A CP stack may be used providing transport of ASN. 1 containers over HTTP and/or providing transport of PFCP containers over HTTP. The CP stack may use MIME multipart for transporting ASN. 1-based and/or PFCP containers, especially using any of the following MIME types: application/vnd.3gpp.xnap, application/vnd.3gpp.elap, application/vnd.3gpp.flap, application/vnd.3gpp.pfcp. Examples may enable choosing of a transport layer for a given interface based on information in the NF profile. Examples further enable CN or RAN node querying NRF including protocol stack(s) supported as part of the query.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for choosing a supported transport layer protocol at a first network node (200) of a telecommunication system (300) for communicating with a second network node (220) of the telecommunication system (300), the method (10) comprising
obtaining (12), at the first network node (200), information about one or more supported transport layer protocols of the second network node (220);
selecting (14) a supported transport layer protocol, which is supported by the first network node (200) and the second network node (220), based on the information about the supported transport layer protocols of the second network node (220); and
communicating (16) messages between the first network node (200) and the second network node (220) based on the supported transport layer protocol.

2. The method (10) of claim 1, wherein the obtaining (12) of the information about supported transport layer protocols of the second network node (220) comprises communicating with a third network node (230) and receiving the information about supported transport layer protocols of the second network node (220) from the third network node (230), especially wherein the communicating with the third network node comprises requesting information based on any one of the parameters network node identifier, network node type, and supported transport layer protocol(s).

3. The method (10) of one of the claims 1 or 2, wherein the third network node (230) is configured to perform a network repository function.

4. The method (10) of one of the claims 1 to 3, wherein the obtaining (12) of the information about supported transport layer protocols of the second network node (220) comprises determining the information based on an endpoint address of the second network node (220), based on a predefined protocol port, and/or based on a name of the second network node (220).

5. The method (10) of one of the claims 1 to 4, wherein the information about supported transport layer protocols of the second network node (220) indicates a supported protocol stack and/or specific versions of supported protocols.

6. The method (10) of one of the claims 1 to 5, wherein the information about supported transport layer protocols of the second network node (220) comprises information about which interfaces of the second network node (220) support which protocol versions.

7. The method (10) of one of the claims 1 to 6, wherein the telecommunication system (300) comprises a radio access network, RAN, and a core network, CN, and wherein the first and second network nodes are comprised in the RAN, the CN, or one in the RAN and one in the CN.

8. The method (10) of one of the claims 1 to 7, wherein the information about supported transport layer protocols of the second network node (220) comprises information about whether an interface of the second network node (220) supports Quick Universal Datagram Protocol, UDP, Internet Connections, QUIC and/or Hyper Text Transfer Protocol, HTTP, -based communication, especially whether HTTP/2 and/or HTTP/3 are supported.

9. The method (10) of claim 8, wherein the interfaces include one or more elements of the group of Packet Forwarding Control Protocol, PFCP; Next Generation Application Protocol, NG-AP; Xn Application Protocol, Xn-AP; E1 Application Protocol, E1-AP; F1 Application Protocol, F1-AP; and/or other Abstract Syntax Notation.1, ASN.1, -based schemas according to the specification of the 3rd Generation Partnership Project.

10. The method (10) of one of the claims 1 to 9, wherein the information about supported transport layer protocols of the second network node (220) is associated to an interface of the second network node (220), especially an interface associated to a network function service, N1, N2 and/or N4 interface.

11. The method (10) of one of the claims 1 to 10, wherein the supported transport layer protocol supports a control plane, CP, protocol stack that provides transport of ASN.1 and/or PFCP containers over HTTP.

12. The method (10) of claim 11, wherein the CP protocol stack is configured to use Multipurpose Internet Mail Extensions, MIME, multipart for transporting ASN.1-based and/or PFCP containers, especially using one or more of the following MIME types:
application/vnd.3gpp.xnap,
application/vnd.3gpp.e1ap,
application/vnd.3gpp.flap, and
application/vnd.3gpp.pfcp.

13. The method (10) of one of the claims 1 to 12, further comprising providing information about supported transport layer protocols and/or associated MIME types of the first network node (200) to another network node.

14. A computer program having a program code for performing one of the methods (10) of claims 1 to 13, when the computer program is executed on a computer, a processor, or a programmable hardware component.

15. An apparatus (20) configured to choose a supported transport layer protocol at a first network node (200) of a telecommunication system (300) for communicating with a second network node (230) of the telecommunication system (300), the apparatus (10) comprising
one or more interfaces (22) configured to communicate in the telecommunication system (300); and
one or more processing devices (24) configured to perform one of the methods (10) of claims 1 to 13.

## Amended claims

### Amended claims in accordance with Rule 137(2) EPC.

1. A method (10) for choosing a supported transport layer protocol at a first network node (200) of a telecommunication system (300) for communicating with a second network node (220) of the telecommunication system (300), the method (10) comprising
obtaining (12), at the first network node (200), information about one or more supported transport layer protocols of the second network node (220);
selecting (14) a supported transport layer protocol, which is supported by the first network node (200) and the second network node (220), based on the information about the supported transport layer protocols of the second network node (220); and
communicating (16) messages between the first network node (200) and the second network node (220) based on the supported transport layer protocol,
wherein the supported transport layer protocol supports a control plane, CP, protocol stack that provides transport of Abstract Syntax Notation. 1, ASN.1, and/or Packet Forwarding Control Protocol, PFCP, containers over Hyper Text Transfer Protocol, HTTP.

2. The method (10) of claim 1, wherein the obtaining (12) of the information about supported transport layer protocols of the second network node (220) comprises communicating with a third network node (230) and receiving the information about supported transport layer protocols of the second network node (220) from the third network node (230), especially wherein the communicating with the third network node comprises requesting information based on any one of the parameters network node identifier, network node type, and supported transport layer protocol(s).

3. The method (10) of one of the claims 1 or 2, wherein the third network node (230) is configured to perform a network repository function.

4. The method (10) of one of the claims 1 to 3, wherein the obtaining (12) of the information about supported transport layer protocols of the second network node (220) comprises determining the information based on an endpoint address of the second network node (220), based on a predefined protocol port, and/or based on a name of the second network node (220).

5. The method (10) of one of the claims 1 to 4, wherein the information about supported transport layer protocols of the second network node (220) indicates a supported protocol stack and/or specific versions of supported protocols.

6. The method (10) of one of the claims 1 to 5, wherein the information about supported transport layer protocols of the second network node (220) comprises information about which interfaces of the second network node (220) support which protocol versions.

7. The method (10) of one of the claims 1 to 6, wherein the telecommunication system (300) comprises a radio access network, RAN, and a core network, CN, and wherein the first and second network nodes are comprised in the RAN, the CN, or one in the RAN and one in the CN.

8. The method (10) of one of the claims 1 to 7, wherein the information about supported transport layer protocols of the second network node (220) comprises information about whether an interface of the second network node (220) supports Quick Universal Datagram Protocol, UDP, Internet Connections, QUIC and/or Hyper Text Transfer Protocol, HTTP, -based communication, especially whether HTTP/2 and/or HTTP/3 are supported.

9. The method (10) of claim 8, wherein the interfaces include one or more elements of the group of Packet Forwarding Control Protocol, PFCP; Next Generation Application Protocol, NG-AP; Xn Application Protocol, Xn-AP; E1 Application Protocol, E1-AP; F1 Application Protocol, F1-AP; and/or other Abstract Syntax Notation.1, ASN.1, -based schemas according to the specification of the 3rd Generation Partnership Project.

10. The method (10) of one of the claims 1 to 9, wherein the information about supported transport layer protocols of the second network node (220) is associated to an interface of the second network node (220), especially an interface associated to a network function service, N1, N2 and/or N4 interface.

11. The method (10) of one of the claims 1 to 10, wherein the CP protocol stack is configured to use Multipurpose Internet Mail Extensions, MIME, multipart for transporting ASN.1-based and/or PFCP containers, especially using one or more of the following MIME types:
application/vnd.3gpp.xnap,
application/vnd.3gpp.elap,
application/vnd.3gpp.flap, and
application/vnd.3gpp.pfcp.

12. The method (10) of one of the claims 1 to 11, further comprising providing information about supported transport layer protocols and/or associated MIME types of the first network node (200) to another network node.

13. A computer program having a program code for performing one of the methods (10) of claims 1 to 12, when the computer program is executed on a computer, a processor, or a programmable hardware component.

14. An apparatus (20) configured to choose a supported transport layer protocol at a first network node (200) of a telecommunication system (300) for communicating with a second network node (230) of the telecommunication system (300), the apparatus (10) comprising
one or more interfaces (22) configured to communicate in the telecommunication system (300); and
one or more processing devices (24) configured to perform one of the methods (10) of claims 1 to 12.
